# EUROPEAN PATENT APPLICATION

(11) **EP 4 654 336 A1**
(43) Date of publication of application: **26.11.2025**
(21) Application number: 24222808.8
(22) Date of filing: 23.12.2024
(51) Int. Cl.: H01M 10/617, H01M 10/643, H01M 50/204, H01M 10/613, H01M 10/6567, H01M 10/6556, H01M 50/213

(54) **BATTERY BOX AND BATTERY PACK CONTAINING THE SAME**

(30) Priority: 20.05.2024 CN 202421111018 U; 10.10.2024 WO PCT/CN2024/123829
(71) Applicant: Eve Energy Co., Ltd., Huizhou, Guangdong 516006 (CN)
(72) Inventor: LI, Xingyao, Guangdong, 516006 (CN); ZHANG, Guojiang, Guangdong, 516006 (CN); YAN, Shiwei, Guangdong, 516006 (CN); HUANG, Liansheng, Guangdong, 516006 (CN)
(74) Representative: Weickmann & Weickmann PartmbB

(57) **Abstract**

Provided are a battery box and a battery pack containing the battery box. The battery box (100) includes a box body (11), a first liquid-cooling plate (12), a second liquid-cooling plate (13), a liquid inlet (14), and a liquid outlet (15). Accommodation cavity (111) for accommodating battery module (200) is disposed within the box body (11). The first liquid-cooling plate (12) and the second liquid-cooling plate (13) are located on two sides of the accommodation cavity (111) in the first direction respectively. First runners (121) are distributed within the first liquid-cooling plate (12). Length of each first runner (121) extends in the third direction. The first liquid-cooling plate (12) is provided with first immersion holes (122) communicating with the first runners (121) and the accommodation cavity (111). Second runners (131) are distributed within the second liquid-cooling plate (13). Length of each second runner (131) extends in the third direction. The second liquid-cooling plate (13) is provided with second immersion holes (132) communicating with the second runners (131) and the accommodation cavity (111). The liquid inlet (14) and the liquid outlet (15) communicate with the first runners (121) and the second runners (131) respectively. The battery box in the present application can increase the probability of each cell contacting a coolant, improve the heat exchange uniformity and effects of all the cells, and prolong the service life of all the cells.

## Description

### TECHNICAL FIELD

The present application relates to the field of battery technology, for example, to a battery box and a battery pack containing the battery box.

### BACKGROUND

A battery pack generally includes a battery box and a battery module disposed within the battery box. The battery module is formed by arranging multiple cells in a set manner. Heat dissipation of the battery pack is greatly important. The heat dissipation effect directly affects the service life of the battery pack. At present, the battery pack adopts air-cooling heat dissipation, water-cooling plate heat dissipation and immersion coolant heat dissipation. For the immersion coolant heat dissipation, a coolant is directly sent into the battery box to contact a housing of the multiple cells for heat exchange. At present, in this immersion coolant heat dissipation manner, one end of the battery box in the length direction is provided with a liquid inlet, and the other end of the battery box in the length direction is provided with a liquid outlet. The coolant is introduced into the liquid inlet. After the multiple cells are immersed in the coolant, the coolant flows out from the liquid outlet. The coolant is cooled outside the battery box and then is delivered to the liquid inlet after cooling. As such, the multiple cells of the battery module are cooled.

### TECHNICAL PROBLEM

After the coolant enters the battery box, cells close to the liquid inlet can contact more coolant with a low temperature while cells away from the liquid inlet contact less or even cannot contact coolant with a low temperature. As a result, part of the multiple cells within the battery box cannot be immersed in the coolant with a low temperature. This part of cells is prone to have a poor heat exchange effect. The cells with a poor heat exchange effect may age prematurely and have a reduction in capacity, resulting in shortening the service life of the battery pack.

### SUMMARY

The present application provides a battery box. The battery box includes a box body, a first liquid-cooling plate, a second liquid-cooling plate, a liquid inlet, and a liquid outlet.

An accommodation cavity for accommodating a battery module is disposed within the box body, and the first liquid-cooling plate and the second liquid-cooling plate are located on two sides of the accommodation cavity in a first direction respectively.

A plurality of first runners are distributed within the first liquid-cooling plate in a second direction, a length of each of the plurality of first runners extends in a third direction, one side surface of the first liquid-cooling plate facing the accommodation cavity is provided with a plurality of first immersion holes communicating with the plurality of first runners and the accommodation cavity, and among the plurality of first immersion holes, first immersion holes communicating with a same first runner of the plurality of first runners are spaced apart in the third direction.

A plurality of second runners are distributed within the second liquid-cooling plate in the second direction, a length of each of the plurality of second runners extends in the third direction, one side surface of the second liquid-cooling plate facing the accommodation cavity is provided with a plurality of second immersion holes communicating with the plurality of second runners and the accommodation cavity, and among the plurality of second immersion holes, second immersion holes communicating with a same second runner of the plurality of second runners are spaced apart in the third direction.

The first direction, the second direction and the third direction are disposed at an included angle to each other.

The liquid outlet communicates with the plurality of first runners, and the liquid inlet communicates with the plurality of second runners.

The present application further provides a battery pack including a battery module and a battery box, where the battery module is sealed and installed within the battery box.

### BENEFICIAL EFFECTS

The present application has the beneficial effects below.

The first liquid-cooling plate and the second liquid-cooling plate are disposed on the two opposite sides of the accommodation cavity in the first direction respectively. After entering the plurality of second runners from the liquid inlet, a coolant is first diverted and then enters the accommodation cavity through the plurality of second immersion holes to perform immersion heat exchange and heat dissipation on the battery module. Since the plurality of second runners are distributed in the second direction, and the length direction of each second runner extends in the third direction, the plurality of second immersion holes can be distributed on the entire surface of the second liquid-cooling plate, and the coolant entering the accommodation cavity can be quickly diverted to multiple positions of the battery module, thereby increasing the probability of each cell of the battery module contacting the coolant, improving the heat dissipation uniformity and prolonging the service life of each cell. The plurality of first immersion holes on the first liquid-cooling plate can quickly guide the coolant that has finished heat exchange at the multiple positions of the battery module into the plurality of first runners, and then the coolant is discharged to the outside of the battery box through the liquid outlet, thereby reducing the residence time of the high-temperature coolant within the accommodation cavity and avoiding low heat dissipation efficiency at a position of the battery module close to the plurality of first immersion holes due to a mixed flow.

### BRIEF DESCRIPTION OF DRAWINGS

FIG. 1 is a perspective view of a battery box according to some embodiments of the present application.
FIG. 2 is an exploded view of a battery box according to some embodiments of the present application.
FIG. 3 is a perspective view taken at a viewing angle to show a first liquid-cooling plate according to some embodiments of the present application.
FIG. 4 is a perspective view taken at another viewing angle to show a first liquid-cooling plate according to some embodiments of the present application.
FIG. 5 is an exploded view of a first liquid-cooling plate according to some embodiments of the present application.
FIG. 6 is a perspective view taken at a viewing angle to show a second liquid-cooling plate according to some embodiments of the present application.
FIG. 7 is a perspective view taken at another viewing angle to show a second liquid-cooling plate according to some embodiments of the present application.
FIG. 8 is an exploded view of a second liquid-cooling plate according to some embodiments of the present application.
FIG. 9 is a bottom view of a second liquid-cooling plate according to some embodiments of the present application (a second sealing plate 37 is not shown).
FIG. 10 is a view illustrating the structure of a battery pack according to some embodiments of the present application (a first liquid-cooling plate is not shown).
FIG. 11 is an exploded view of a battery pack according to some embodiments of the present application.
FIG. 12 is a bottom view of a battery pack according to some embodiments of the present application (a second liquid-cooling plate is not shown).
FIG. 13 is a cross-sectional view of a battery pack according to some embodiments of the present application.
FIG. 14 is another cross-sectional view of a battery pack according to some embodiments of the present application.
FIG. 15 is a cross-sectional view of a diverter according to some embodiments of the present application.
FIG. 16 is a perspective view of a battery pack according to some embodiments of the present application.
FIG. 17 is another exploded view of a battery pack according to some embodiments of the present application.
FIG. 18 is another cross-sectional view of a battery pack according to some embodiments of the present application.
FIG. 19 is a top view of a limit member and a battery module according to some embodiments of the present application.
FIG. 20 is a partial view of a limit member and a battery module in FIG. 19.
FIG. 21 is a top view of a support member according to some embodiments of the present application.
FIG. 22 is a partial view of a support member in FIG. 21.
FIG. 23 is yet another cross-sectional view of a battery pack according to some embodiments of the present application.

### Reference list

- 100: battery box
- 200: battery module
- 200a: cell group
- 201: cell
- 202: flow-guiding gap
- 11: box body
- 111: accommodation cavity
- 12: first liquid-cooling plate
- 121: first runner
- 122: first immersion hole
- 123: first collection sub-channel
- 124: first general collection channel
- 125: first substrate
- 126: first sealing plate
- 13: second liquid-cooling plate
- 131: second runner
- 132: second immersion hole
- 133: second collection sub-channel
- 134: second general collection channel
- 135: diverter
- 135a: diversion outer peripheral surface
- 135b: diversion bottom surface
- 135c: diversion top surface
- 1351: diversion guide surface
- 1352: connection surface
- 136: second substrate
- 137: second sealing plate
- 138: liquid inlet member
- 1381: liquid inlet channel
- 139: limit protrusion
- 14: liquid inlet
- 15: liquid outlet
- 16: liquid inlet joint
- 17: liquid outlet joint
- 300: battery box
- 400: battery module
- 400a: cell group
- 401: cell
- 402: flow-guiding gap
- 402a: first flow-guiding gap
- 402b: second flow-guiding gap
- 21: box body
- 211: accommodation cavity
- 22: first liquid-cooling plate
- 221: first runner
- 222: first immersion hole
- 225: first substrate
- 226: first sealing plate
- 23: second liquid-cooling plate
- 231: second runner
- 232: second immersion hole
- 236: second substrate
- 237: second sealing plate
- 24: liquid inlet
- 25: liquid outlet
- 26: liquid inlet joint
- 27: liquid outlet joint
- 28: support member
- 281: through hole
- 282: positioning groove
- 283: support block
- 283a: flow-guiding runner
- 29: limit member
- 291: accommodation space
- 291a: cell profiling surface
- 32: first liquid-cooling plate
- 33: second liquid-cooling plate
- 34: liquid inlet
- 35: liquid outlet
- 36: liquid inlet joint
- 37: liquid outlet joint
- 38: liquid inlet member
- 381: liquid inlet channel
- 382: liquid outlet channel

### DETAILED DESCRIPTION

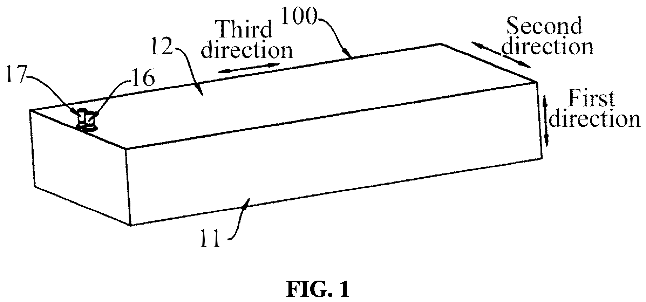

As shown in FIG. 1, an embodiment of the present application provides a battery box 100. In this embodiment, the first direction is the vertical direction, the second direction is the width direction of the battery box 100, and the third direction is the length direction of the battery box 100.

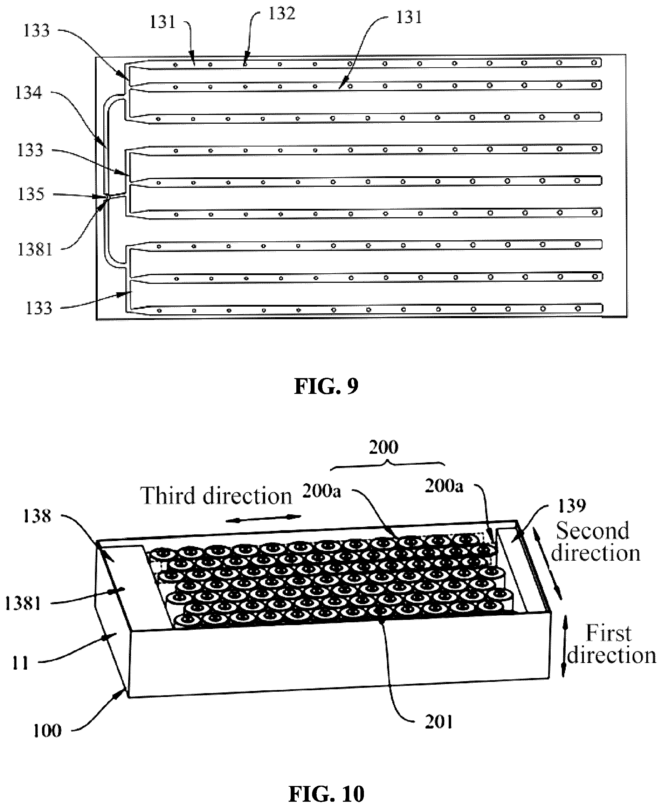

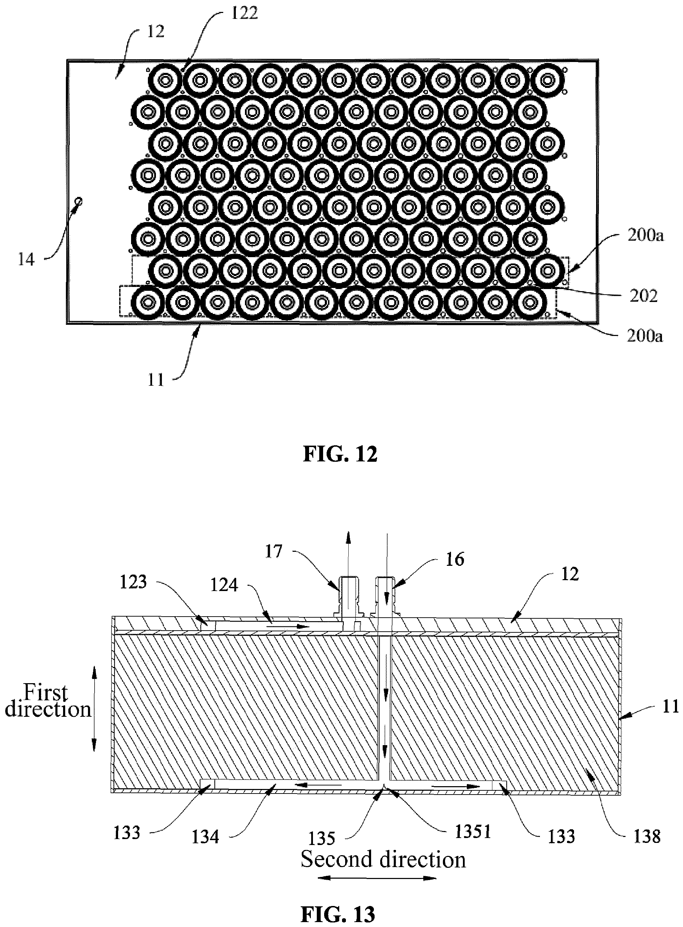

As shown in FIG. 1 (and referring to FIGS. 10 and 12), cells 201 of a battery module 200 installed within the battery box 100 being cylindrical cells is used as an example below for illustration. The cells 201 are not limited to the cylindrical cells, but may also be square, polygonal, or specially-shaped cells. The specific structure of the cells 201 is not limited, and the arrangement of the cells 201 is adaptively adjusted according to the specific shape of the cells 201, which is not described in detail herein.

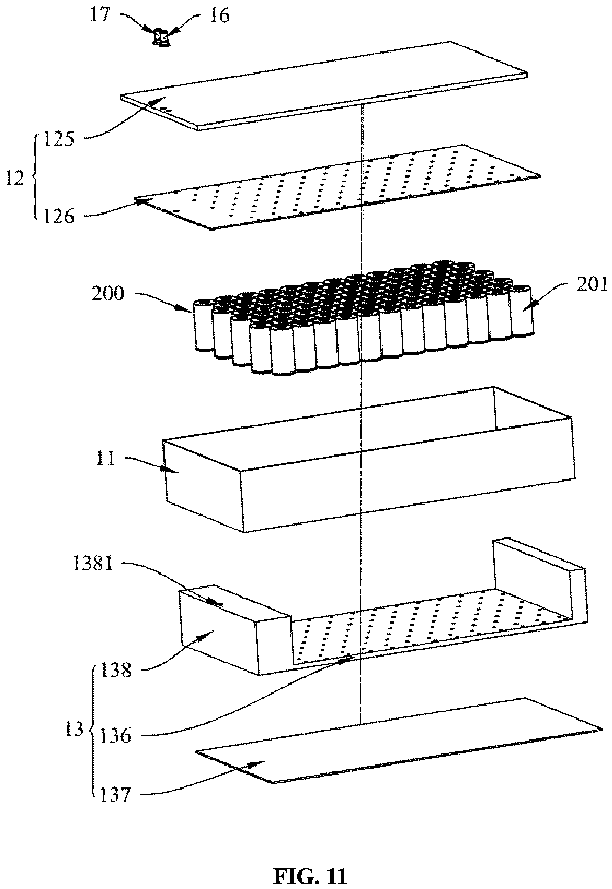

In this embodiment, as shown in FIGS. 1 to 9 (referring to FIGS. 10 to 14), the battery box 100 includes a box body 11, a first liquid-cooling plate 12, and a second liquid-cooling plate 13. An accommodation cavity 111 for accommodating the battery module 200 is disposed within the box body 11. The first liquid-cooling plate 12 and the second liquid-cooling plate 13 are located on two sides of the accommodation cavity 111 in the first direction respectively. Multiple first runners 121 are distributed within the first liquid-cooling plate 12 in the second direction, and the length of each first runner 121 extends in the third direction. One side surface of the first liquid-cooling plate 12 facing the accommodation cavity 111 is provided with multiple first immersion holes 122. All the first immersion holes 122 communicate with the multiple first runners 121 and the accommodation cavity 111. All first immersion holes 122 communicating with the same first runner 121 are spaced apart in the third direction. Multiple second runners 131 are distributed within the second liquid-cooling plate 13 in the second direction, and the length of each second runner 131 extends in the third direction. One side surface of the second liquid-cooling plate 13 facing the accommodation cavity 111 is provided with multiple second immersion holes 132. All the second immersion holes 132 communicate with the multiple second runners 131 and the accommodation cavity 111. All second immersion holes 132 communicating with the same second runner 131 are spaced apart in the third direction. The battery box 100 is further provided with a liquid inlet 14 and a liquid outlet 15. The liquid outlet 15 communicates with the multiple first runners 121, and the liquid inlet 14 communicates with the multiple second runners 131.

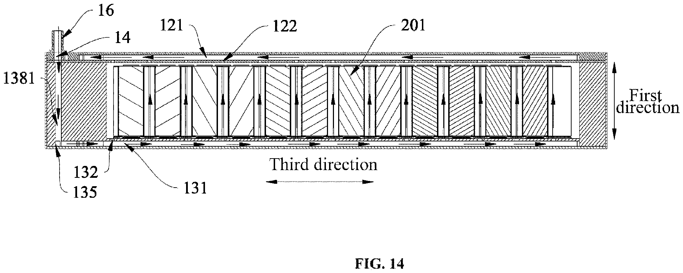

Referring to FIG. 14, the direction indicated by arrows is the direction in which a coolant flows. In the battery box 100 of the embodiment of the present application, the first liquid-cooling plate 12 and the second liquid-cooling plate 13 are disposed on the two opposite sides of the accommodation cavity 11 in the first direction respectively. After entering the multiple second runners 131 from the liquid inlet 14, the coolant is first diverted and then enters the accommodation cavity 111 through the multiple second immersion holes 132 to perform immersion heat exchange and heat dissipation on the battery module 200. Since the multiple second runners 131 are distributed in the second direction, and the length direction of each second runner 131 extends in the third direction, the multiple second immersion holes 132 can be distributed on the entire surface of the second liquid-cooling plate 13, and the coolant entering the accommodation cavity 111 can be quickly diverted to multiple positions of the battery module 200, thereby increasing the probability of each cell 201 of the battery module 200 contacting the coolant, improving the heat dissipation uniformity and prolonging the service life of each cell 201. The multiple first immersion holes 122 on the first liquid-cooling plate 12 can quickly guide the coolant that has finished heat exchange at the multiple positions of the battery module 200 into the multiple first runners 121, and then the coolant is discharged to the outside of the battery box 100 through the liquid outlet 15, thereby reducing the residence time of the high-temperature coolant within the accommodation cavity 111 and avoiding low heat dissipation efficiency at a position of the battery module 200 close to the plurality of first immersion holes 122 due to a mixed flow.

In this embodiment, the first liquid-cooling plate 12 is located above the second liquid-cooling plate 13. This design allows the coolant to first enter the second liquid-cooling plate 13 below and then enter the accommodation cavity 111 to immerse the cells 201 of the battery module 200 in the coolant from bottom to top, thereby dissipating the heat of the cells 201, and allows the coolant to be collected in the multiple first runners 121 within the first liquid-cooling plate 12 through the multiple first immersion holes 122 on the first liquid-cooling plate 12 above and to be then discharged through the liquid outlet 15. This bottom-to-top convection manner allows the length of the cooling path of the coolant flowing through each cell 201 at each position of the battery module 200 to be almost the same. The paths having the uniform length allow the heat dissipation effects of the cells 201 to be more uniform, thereby prolonging the service life of the entire battery module 200. In the present application, the first liquid-cooling plate 12 is not limited to being disposed above the second liquid-cooling plate 13, and the positions of the two may also be interchanged, that is, the second liquid-cooling plate 13 is disposed above the first liquid-cooling plate 12 to achieve the top-to-bottom convection, and the heat dissipation effect is consistent with the effect when the first liquid-cooling plate 12 is located above the second liquid-cooling plate 13.

Optionally, the liquid inlet 14 and the liquid outlet 15 are located on the same side of the battery box 100 in the first direction. The liquid inlet 14 and the liquid outlet 15 are disposed on the same side of the battery box 100 in the first direction, that is, the liquid inlet 14 and the liquid outlet 15 are disposed on the upper side surface of the battery box 100 or the lower side surface of the battery box 100 so that the liquid inlet 14 and the liquid outlet 15 can be prevented from occupying the space of the battery box 100 in the horizontal direction, and the battery box 100 can be arranged more compactly, thereby increasing the space utilization rate. Optionally, the liquid inlet 14 and the liquid outlet 15 are disposed on the first liquid-cooling plate 12. When the liquid inlet 14 and the liquid outlet 15 are located on the upper surface of the battery box 100, the battery box 100 can be easily taken over and maintained externally, and no avoidance structure is required at the bottom of the battery box 100, which makes the structural design simpler. Optionally, the liquid inlet 14 and the liquid outlet 15 are adjacent to one end of the battery box 100 in the third direction, which can shorten the length of pipes laid within the battery box 100 and save costs to reduce the space occupancy rate within the battery box 100.

In other embodiments, the liquid inlet 14 and the liquid outlet 15 are not limited to being disposed on the same side surface of the battery box 100 but may also be disposed on different side surfaces. For example, the liquid inlet 14 is disposed on the lower side surface of the battery box 100, that is, the liquid inlet 14 is disposed on the second liquid-cooling plate 13; the liquid outlet 15 is disposed on the upper side surface of the battery box 100, that is, the liquid outlet 15 is disposed on the first liquid-cooling plate 12. Alternatively, the liquid inlet 14 and the liquid outlet 15 are disposed on the left side surface of the battery box 100 and the right side surface of the battery box 100 or the front side surface of the battery box 100 and the rear side surface of the battery box 100.

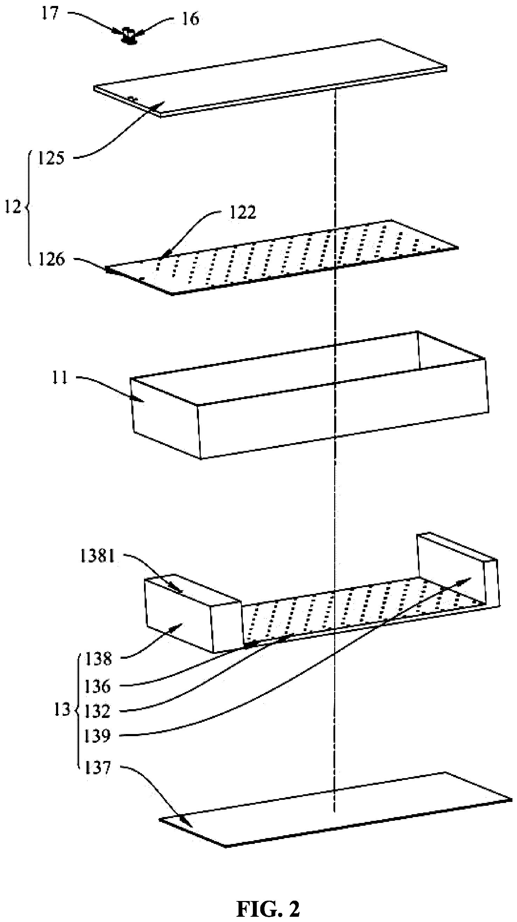

As shown in FIGS. 2, 6 and 8 to 10 (in conjunction with FIGS. 13 and 14), the liquid inlet 14 communicates with the second liquid-cooling plate 13 through a liquid inlet channel 1381. Since the liquid inlet 14 and the liquid outlet 15 are disposed on the first liquid-cooling plate 12, the second liquid-cooling plate 13 cannot directly communicate with the liquid inlet 14. Therefore, the liquid inlet channel 1381 is provided as a transition to communicate with the liquid inlet 14 and the second liquid-cooling plate 13. Optionally, a liquid inlet member 138 is disposed within the accommodation cavity 111 and connected to the first liquid-cooling plate 12 and the second liquid-cooling plate 13 separately; the liquid inlet channel 1381 is disposed within the liquid inlet member 138; the liquid inlet 14 passes through the first liquid-cooling plate 12, communicates with the liquid inlet channel 1381 and is spaced apart from the multiple first runners 121; the liquid inlet channel 1381 communicates with all the second runners 131. By providing the liquid inlet member 138 and disposing the liquid inlet member 138 within the accommodation cavity 111, the length of the liquid inlet member 138 can be shortened as much as possible while that the liquid inlet 14 communicates with the multiple second runners 131 is ensured, so that the space occupied by components is saved. Moreover, the short length of the liquid inlet member 138 makes the length of the liquid inlet channel 1381 short, thereby reducing the influence of the coolant that has finished heat exchange within the accommodation cavity 111 on the coolant within the liquid inlet channel 1381. In other embodiments, the liquid inlet member 138 may also be disposed outside the accommodation cavity 111, that is, the liquid inlet member 138 is disposed outside the box body 11, thereby reducing the influence of the coolant that has finished heat exchange within the accommodation cavity 111 on the coolant within the liquid inlet channel 1381.

Optionally, the liquid inlet member 138 is securely connected to the second liquid-cooling plate 13. The liquid inlet member 138 is securely connected to the second liquid-cooling plate 13, which can reduce the difficulty of assembling the liquid inlet member 138 and prevent the liquid inlet member 138 from moving in the accommodation cavity 111. Optionally, the liquid inlet member 138 and the second liquid-cooling plate 13 may be molded integrally, such as integral injection molding or integral casting. Integral molding can reduce the manufacturing difficulty. Moreover, no additional consideration of sealing is required at the connection position between the liquid inlet member 138 and the second liquid-cooling plate 13, which effectively prevents the coolant that has finished heat exchange within the accommodation cavity 111 from entering the liquid inlet channel 1381 of the liquid inlet member 138. An upper end of the liquid inlet member 138 tightly abuts against one side surface of the first liquid-cooling plate 12 located within the accommodation cavity 111, and a sealing ring may be disposed at the abutment position and surround the liquid inlet 14 to prevent the coolant entering the liquid inlet 14 from leaking into the accommodation cavity 111 from the abutment position of the liquid inlet member 138 and the first liquid-cooling plate 12. In other embodiments, the liquid inlet member 138 may also be manufactured separately from the second liquid-cooling plate 13 and then assembled with the second liquid-cooling plate 13 using screws, buckles, and bonding.

In addition, the battery box 100 is further provided with a liquid inlet joint 16 and a liquid outlet joint 17. The liquid inlet joint 16 is provided corresponding to the liquid inlet 14, and the liquid outlet joint 17 is provided corresponding to the liquid outlet 15. The liquid inlet joint 16 and the liquid outlet joint 17 are used for connecting an external pipeline to achieve the circulation cooling of the coolant. The liquid inlet joint 16 and the liquid outlet joint 17 may be quick-release joints to implement quick disassembly and assembly of the external pipeline.

In an embodiment, the battery module 200 includes multiple rows of cell groups 200a arranged in the second direction, each row of the cell groups 200a includes multiple cells 201 arranged in the third direction, and flow-guiding gaps 202 are formed between at least two adjacent rows of the cell groups 200a, where each flow-guiding gap 202 is correspondingly provided with a respective first runner 121 and a respective second runner 131. The multiple first runners 121 on the first liquid-cooling plate 12 and the multiple second runners 131 on the second liquid-cooling plate 13 are disposed in one-to-one correspondence with the flow-guiding gaps 202 of the battery module 200. After the multiple second immersion holes 132 on the multiple second runners 131 introduce the coolant into the accommodation cavity 111, the coolant directly enters the multiple flow-guiding gaps 202, thereby increasing the chance of each cell 201 in each row of the cell groups 200a contacting the coolant and avoiding low local heat exchange efficiency of each cell 201. The multiple first immersion holes 122 on the multiple first runners 121 can recover the coolant that has finished heat exchange in the multiple flow-guiding gaps 202 correspondingly, thereby accelerating the discharging of the coolant that has finished heat exchange to the outside of the battery box 100 and reducing the residence time of the coolant within the accommodation cavity 111.

Optionally, a flow-guiding gap 202 is also formed between each of two sides of the battery module 200 in the second direction and the box body 1, and the flow-guiding gap 202 between each side and the box body 11 is also provided with a first runner 121 and a second runner 131 that correspond to the flow-guiding gap 202. This design can enable cells 201 on the two sides of the battery module 200 in the second direction to also contact the coolant with a low temperature, thereby ensuring uniform heat exchange of the cells 201 at such positions.

Optionally, the multiple first immersion holes 122 are provided in one-to-one correspondence with the multiple second immersion holes 132, that is, the number of first immersion holes 122 is the same as the number of second immersion holes 132, and projections of the multiple first immersion holes 122 at least partially coincide with projections of the multiple second immersion holes 132 in the first direction. The multiple first immersion holes 122 are provided in one-to-one correspondence with the multiple second immersion holes 132 so that the coolant can form a bottom-to-top convection effect within the flow-guiding gaps 202, thereby accelerating the heat dissipation and the discharging of the coolant that has finished heat exchange and improving the heat dissipation effect.

In this embodiment, the dimension of a first immersion hole 122 is consistent with the dimension of a second immersion hole 132, and the positions of the first immersion hole 122 and the second immersion hole 132 are opposite to each other. This design allows the liquid inlet amount introduced into the accommodation cavity 111 by the second immersion hole 132 to be consistent with the liquid outlet amount discharged from the accommodation cavity 111 by the first immersion hole 122, thereby reducing the disturbance of the coolant within the accommodation cavity 111 and avoiding a mixed flow.

Optionally, the first immersion hole 122 is a circular hole. In other embodiments, the first immersion hole 122 may also be at least one of a semicircular hole, an elliptical hole, a square hole, a polygonal hole, or a special-shaped hole. For example, the first liquid-cooling plate 12 is provided with circular hole-shaped first immersion holes 122 and semicircular hole-shaped first immersion holes 122.

The second immersion hole 132 is a circular hole. In other embodiments, the second immersion hole 132 may also be at least one of a semicircular hole, an elliptical hole, a square hole, a polygonal hole, or a special-shaped hole. For example, the second liquid-cooling plate 13 is provided with circular hole-shaped second immersion holes 132 and semicircular hole-shaped second immersion holes 132.

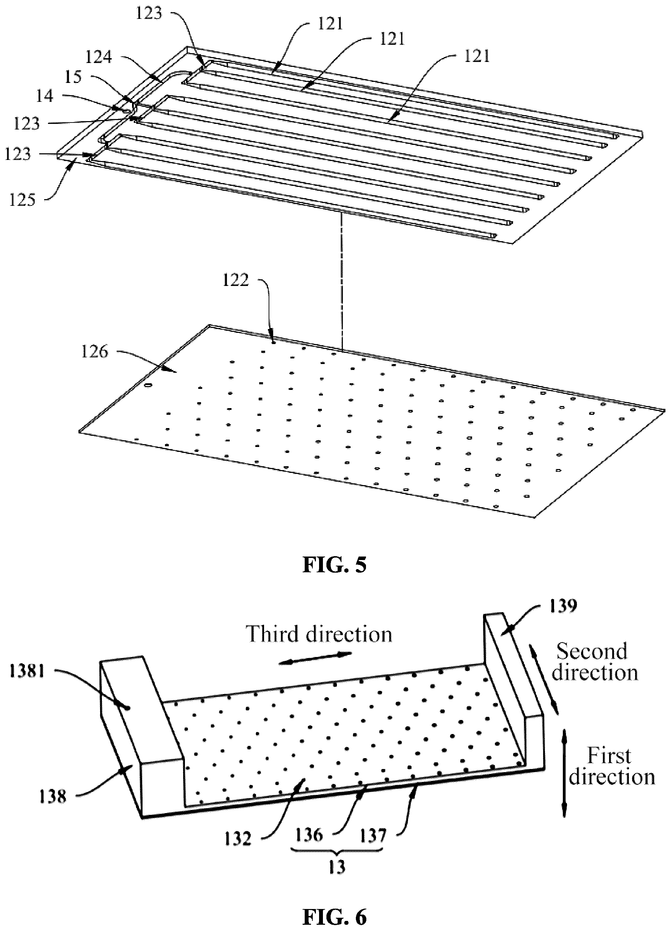

In an embodiment, as shown in FIG. 5 (the reference numerals are the same as those in FIGS. 1 to 4 and 6 to 14), multiple first collection sub-channels 123 and a first general collection channel 124 are disposed within the first liquid-cooling plate 12, and the multiple first collection sub-channels 123 are distributed in the second direction; each first collection sub-channel 123 communicates with at least two first runners 121; all the first collection sub-channels 123 communicate with the first general collection channel 124; the first general collection channel 124 communicates with the liquid outlet 15. The multiple first collection sub-channels 123 are disposed so that the coolant within the multiple first runners 121 can be collected. All the first collection sub-channels 123 communicate with one first general collection channel 124 so that the first general collection channel 124 can be used for collecting the coolant within all the first collection sub-channels 123, thereby facilitating the discharging of the coolant from the liquid outlet 15. Optionally, the length of each first collection sub-channel 123 extends in the second direction, and the length of the first general collection channel 124 also extends in the second direction so that each first collection sub-channel 123 can cover regions of all first runners 121 that need to be connected to each first collection sub-channel 123 as much as possible, and so that the first general collection channel 124 can cover regions of all the first collection sub-channels 123 that need to be connected to the first general collection channel 124. The number of first runners 121 connected to each first collection sub-channel 123 is the same. For example, if the battery module 200 includes eight rows of cell groups 200a, nine flow-guiding gaps 202 exist, and nine first runners 121 corresponding to the nine flow-guiding gaps 202 also exist; three first collection sub-channels 123 may be provided, and each first collection sub-channel 123 communicates with three first runners 121, and the three first collection sub-channels 123 then communicate with the first general collection channel 124. Each first runner 121 is tried to communicate with a respective first collection sub-channel 123.

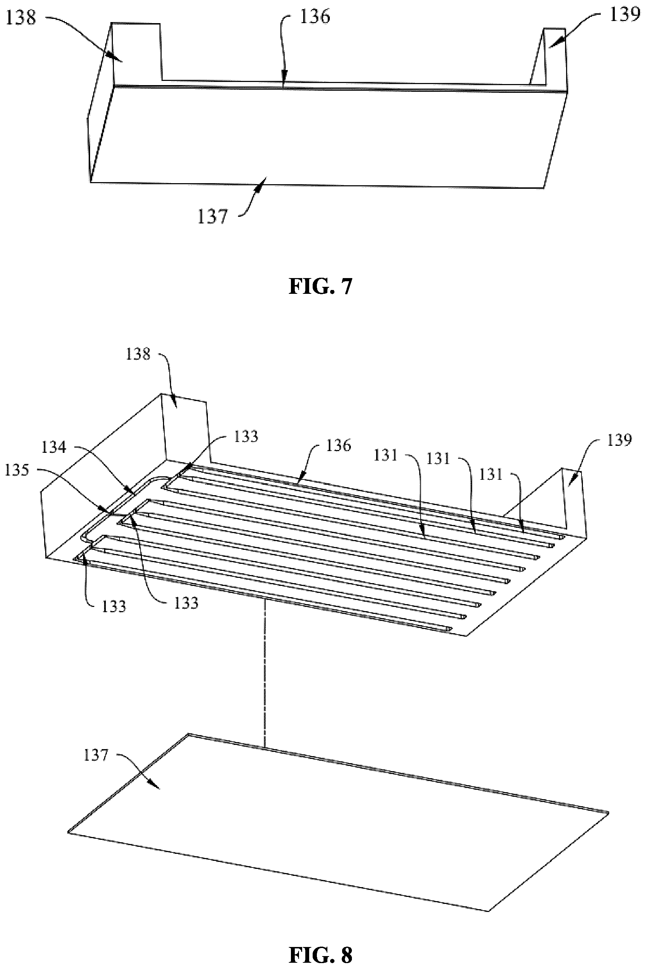

As shown in FIGS. 8 and 9, (the reference numerals are the same as those in FIGS. 1 to 7 and 10 to 14), multiple second collection sub-channels 133 and a second general collection channel 134 are disposed within the second liquid-cooling plate 13, and the multiple second collection sub-channels 133 are distributed in the second direction; each second collection sub-channel 133 communicates with at least two second runners 131; all the second collection sub-channels 133 communicate with the second general collection channel 134; the second general collection channel 134 communicates with the liquid inlet 14. The second general collection channel 134 is disposed so that the coolant from the liquid inlet 14 can be received and then uniformly distributed to the multiple second collection sub-channels 133 through the second general collection channel 134 first to achieve a first diversion, and the multiple second collection sub-channels 133 can uniformly distribute the coolant to the multiple second runners 131 communicating with the multiple second collection sub-channels 133 to achieve a second diversion. After the two diversions, the coolant uniformly enters the accommodation cavity 111 through the multiple second immersion holes 132 to enter the flow-guiding gaps 202 so as to uniformly dissipate the heat of the multiple cells 201, thereby improving the uniformity of heat dissipation. Optionally, the length of each second collection sub-channel 133 extends in the second direction, and the length of the second general collection channel 134 also extends in the second direction so that each second collection sub-channel 133 can cover regions of second runners 131 that need to be connected to each second collection sub-channel 133 as much as possible, and so that the second general collection channel 134 can cover regions of all the second collection sub-channels 133 that need to be connected to the second general collection channel 134, so as to achieve the effect of uniform diversion. As in the preceding embodiment, if the battery module 200 includes eight rows of cell groups 200a, nine second runners 131 are also provided, and three second collection sub-channels 133 may be provided; each second collection sub-channel 133 communicates with three second runners 131; finally, the three second collection sub-channels 133 communicate with the second general collection channel 134. Each second runner 131 is tried to communicate with a respective second collection sub-channel 133.

The present application is not limited to the fact that the numbers of first runners 121 communicating with all the first collection sub-channels 123 are consistent, or the numbers of first runners 121 communicating with all the first collection sub-channels 123 may be not consistent. For example, one first collection sub-channel 123 communicates with two first runners 121, or one first collection sub-channel 123 communicates with three first runners 121.

The present application is also not limited to the fact that the numbers of second runners 131 communicating with all the second collection sub-channels 133 are consistent, or the numbers of second runners 131 communicating with all the second collection sub-channels 133 may be not consistent. For example, one second collection sub-channel 133 communicates with two second runners 131, or one second collection sub-channel 133 communicates with three second runners 131.

The present application is also not limited to the arrangement of the multiple first collection sub-channels 123 and the multiple second collection sub-channels 133. The first general collection channel 124 may be directly provided to communicate with all the first runners 121, and the second general collection channel 134 may be directly provided to communicate with all the second runners 131.

In this embodiment, as shown in FIG. 13 (the reference numerals are the same as those in FIGS. 1 to 12), the second general collection channel 134 includes a liquid inlet region facing the liquid inlet 14, and a diverter 135 is disposed within the liquid inlet region; the outer sidewall of the diverter 135 is at least partially an arc surface; the cross-sectional area of one end of the diverter 135 facing the liquid inlet 14 is smaller than the cross-sectional area of the other end of the diverter 135 facing away from the liquid inlet 14. The diverter 135 is disposed so that the coolant delivered from the liquid inlet 14 can be diverted to prevent the coolant from accelerating to one second collection sub-channel 133. The diverter 135 first pre-diverts the coolant, and then the diverted coolant can be basically uniformly delivered to each second collection sub-channel 133, thereby ensuring that the amount of the coolant with the same temperature within each second runner 131 can remain consistent so that each flow-guiding gap 202 can obtain the coolant with the same temperature and the basically consistent flow amount, and so that the cooling effect of each cell 201 can be the same, the temperature difference of the cells 201 can be reduced, and the service life of the entire battery module 200 can be prolonged. The outer sidewall of the diverter 135 is provided with the arc surface so that the splashing of the coolant delivered from the liquid inlet 14 at the diverter 135 can be reduced, thereby ensuring that the coolant can be diverted while fitting the outer sidewall of the diverter 135. Moreover, the structure with a small upper end and a large lower end can form a good diversion effect, and the lower end of the diverter 135 can form a dispersed structure to ensure that the coolant can be uniformly diverted.

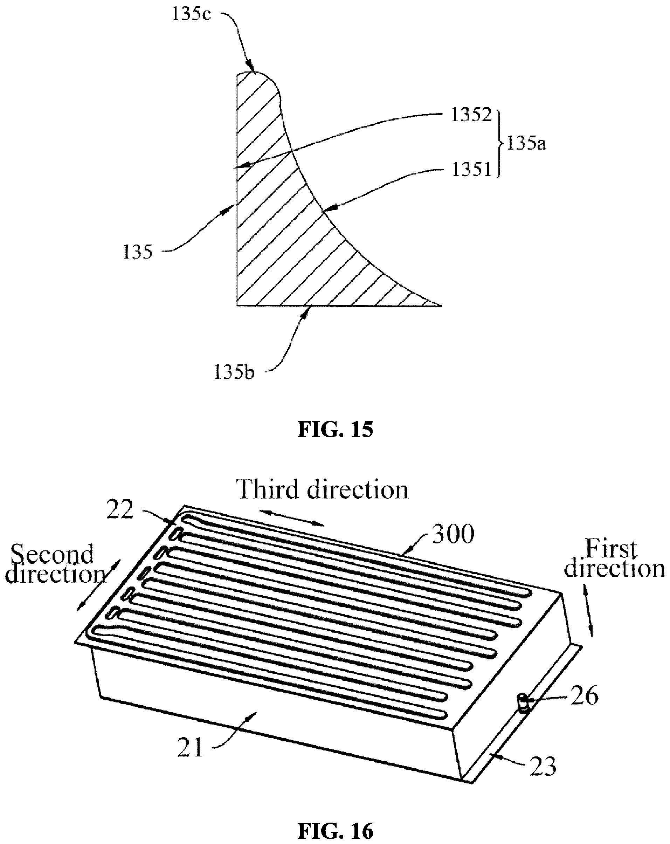

As shown in FIGS. 14 and 15, the diverter 135 includes a diversion outer peripheral surface 135a, a diversion bottom surface 135b, and a diversion top surface 135c. The diversion top surface 135c and the diversion bottom surface 135b are spaced apart in the first direction. The diversion outer peripheral surface 135a is connected to the diversion top surface 135c and the diversion bottom surface 135b. The diversion bottom surface 135b is connected to the bottom surface of the second general collection channel 134. The dimension of the diversion top surface 135c is smaller than the dimension of the diversion bottom surface 135b, that is, the diversion top surface 135c is closer to the liquid inlet 14, and the diversion bottom surface 135b is farther from the liquid inlet 14. The diversion outer peripheral surface 135a includes a connection surface 1352 and a diversion guide surface 1351 that are interconnected in a peripheral portion of the diverter 135. The connection surface 1352 is connected to the inner side surface of the second general collection channel 134, and the diversion guide surface 1351 is a conical surface and faces the multiple second collection sub-channels 133. The structure of the diverter 135 is actually the structure of half of a cone after the cone is cut in half along the direction of the central axis of the cone. The diversion outer peripheral surface of the diverter 135 is provided with the connection surface 1352. This connection surface 1352 can be connected to the inner sidewall of the second general collection channel 134 (the connection surface 1352 is not exposed, and the structure of the connection surface 1352 remains consistent with the structure of the inner sidewall of the second general collection channel 134 so that this position can fit tightly after connection), and the diversion guide surface 1351 with the conical structure is exposed on the diverter 135. The conical structure is used for diverting the coolant from top to bottom and can reduce the resistance and splashing of the coolant as much as possible, thereby ensuring that the coolant can be gradually dispersed from the diversion top surface 135c with a small dimension to the diversion bottom surface 135b with a large dimension along the conical structure. The dispersed coolant then enters the multiple second collection sub-channels 133. In this case, the coolant is more uniformly distributed in each second collection sub-channel 133.

In an embodiment, two sides of the box body 11 in the first direction are provided with a first opening and a second opening respectively, the first liquid-cooling plate 12 is connected to the box body 11 and seals the first opening, and the second liquid-cooling plate 13 is connected to the box body 11 and seals the second opening. Directly disposing the liquid-cooling plates to seal the openings of the box body 11 can save the need to dispose an additional top plate and an additional bottom plate to seal the openings of the box body 11, reduce the number of parts, save the space within the battery box 100, improve the energy density of the battery module 200 within the battery box 100, save the top plate and the bottom plate, and reduce the overall weight of the battery box 100, thereby reducing the weight of the entire battery pack.

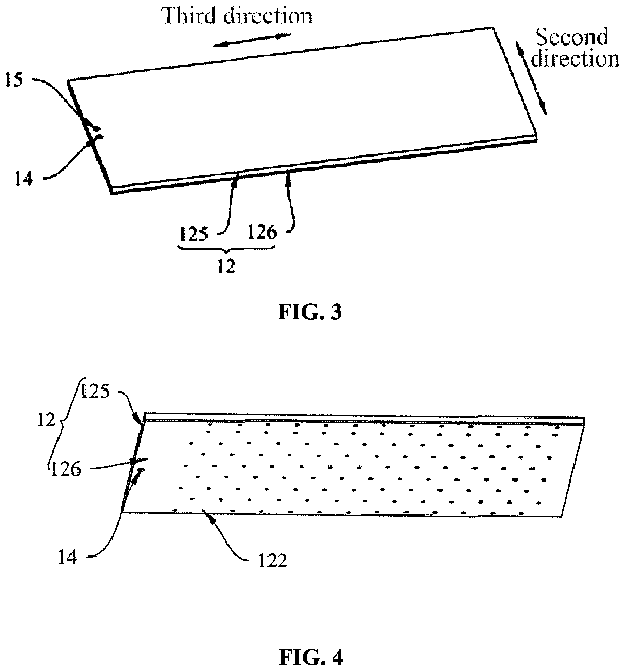

Optionally, as shown in FIGS. 3 to 5 (the reference numerals are the same as those in FIGS. 1 and 2 and 6 to 14), the first liquid-cooling plate 12 includes a first substrate 125 and a first sealing plate 126; one side surface of the first substrate 125 is concavely formed with a first groove, and the side surface of the first substrate 125 formed with the first groove is connected to the first sealing plate 126; the first sealing plate 126 seals the notch of the first groove to form the multiple first runners 121 disposed within the first liquid-cooling plate 12; the multiple first immersion holes 122 are disposed on the first substrate 125 or the first sealing plate 126. The first liquid-cooling plate 12 is manufactured in steps using the first substrate 125 and the first sealing plate 126 and then assembled, which facilitates the molding of the multiple first runners 121 and the multiple first immersion holes 122 and can reduce the manufacturing difficulty. Optionally, the first sealing plate 126 is disposed on one side surface of the first substrate 125 facing the interior of the accommodation cavity 111, so the multiple first immersion holes 122 are disposed on the first sealing plate 126.

As shown in FIGS. 6 to 9 (the reference numerals are the same as those in FIGS. 1 to 5 and 10 to 14), the second liquid-cooling plate 13 includes a second substrate 136 and a second sealing plate 137; one side surface of the second substrate 136 is concavely formed with a second groove, and the side surface of the second substrate 136 formed with the second groove is connected to the second sealing plate 137; the second sealing plate 137 seals the notch of the second groove to form the multiple second runners 131 disposed within the second liquid-cooling plate 13; the multiple second immersion holes 132 are disposed on the second substrate 136 or the second sealing plate 137. The second liquid-cooling plate 13 is manufactured in steps using the second substrate 136 and the second sealing plate 137 and then assembled, which facilitates the molding of the multiple second immersion holes 132 and can reduce the manufacturing difficulty. Optionally, the second sealing plate 137 is disposed on one side surface of the second substrate 136 facing away from the interior of the accommodation cavity 111, so the multiple second immersion holes 132 are disposed on the second substrate 136.

The liquid inlet member 138, the diverter 135, and the second substrate 136 are integrally molded. When the second sealing plate 137 is assembled on the second substrate 136, the diversion bottom surface 135b of the diverter 135 tightly abuts against one side surface of the second sealing plate 137 facing the second substrate 136.

The first substrate 125 is also concavely formed with a groove at a position corresponding to the multiple first collection sub-channels 123 and the first general collection channel 124. After the first sealing plate 126 is installed on the first substrate 125, the groove is sealed to form the multiple first collection sub-channels 123 and the first general collection channel 124.

The second substrate 136 is also concavely formed with a groove at a position corresponding to the multiple second collection sub-channels 133 and the second general collection channel 134. After the second sealing plate 137 is installed on the second substrate 136, the groove is sealed to form the multiple second collection sub-channels 133 and the second general collection channel 134.

In addition, a limit protrusion 139 also protrudes from one side surface of the second substrate 136 facing away from the second sealing plate 137 and is located on the same side of the second substrate 136 as the liquid inlet member 138, and the limit protrusion 139 and the liquid inlet member 138 are adjacent to two ends of the second substrate 136 in the third direction respectively. The arrangement of the limit protrusion 139 is mainly to fill the space between the battery module 200 and the inner sidewall of the box body 11 to prevent the battery module 200 from moving in the third direction within the accommodation cavity 111. In this embodiment, the liquid inlet member 138, the second substrate 136, and the limit protrusion 139 are integrally molded. The liquid inlet member 138, the second substrate 136, and the limit protrusion 139 are made into an integral structure for easy installation.

Optionally, the sum of the areas of all the first immersion holes 122 is S1, the sum of the cross-sectional areas of all the first runners 121 in the second direction is S2, and the ratio of S1 to S2 may satisfy that 3:50 or 1:10; for example, the ratio of S1 to S2 may be that 3:50, 3:43, 3:37.5, 3:33, or 1:10; the sum of the areas of all the second immersion holes 132 is S3, the sum of the cross-sectional areas of all the second runners 131 in the second direction is S4, and the ratio of S3 to S4 may satisfy that 3:50 or 1:10; for example, the ratio of S3 to S4 may be that 3:50, 3:43, 3:37.5, 3:33, or 1:10.

The area of the battery module 200 is S6. The ratio of S1 to S2 and to S6 may satisfy that 13:120:45500 or 13:130:45500, and the ratio of S3 to S4 and to S6 may also satisfy that 13:120:45500 or 13:130:45500. The area of the first immersion hole 122 and the area of the second immersion hole 132 need to be controlled so as not to be too large, which otherwise affects the convection effect.

As shown in FIGS. 10 to 14 (some reference numerals are the same as those in FIGS. 1 to 9), an embodiment of the present application further provides a battery pack. The battery pack includes a battery module 200 and a battery box 100, and the battery module 200 is sealed and installed within the battery box 100. The battery box 100 is the battery box 100 of any one of the preceding embodiments, and the structure of the battery box 100 is not repeated herein.In this embodiment, the battery module 200 includes the multiple rows of cell groups 200a arranged in the second direction, each row of the cell groups 200a includes the multiple cells 201 arranged in the third direction, and two adjacent rows of the cell groups 200a are staggered. This design can enable the battery module 200 to be arranged more compactly, ensure a higher space utilization rate within the battery box 100 and ensure a larger energy density of the battery pack formed after the battery module 200 is assembled.

Optionally, the length of each cell 201 extends in the first direction.

A method for cooling the battery pack includes the steps below.

In S 100, the coolant is provided so that the coolant can enter the liquid inlet channel 1381 of the liquid inlet member 138 from the liquid inlet 14 of the battery box 100; the coolant flows in the first direction to the diverter 135 within the second general collection channel 134, and the diverter 135 diverts the coolant so that the coolant can enter the multiple second collection sub-channels 133.

In S200, the coolant within the multiple second collection sub-channels 133 is then diverted into each second runner 131, and the coolant within each second runner 131 enters the accommodation cavity 111 and each flow-guiding gap 202 of the battery module 200 through a respective second immersion hole 132 to perform immersion heat dissipation on the multiple cells 201 one by one.

In S300, the coolant that has finished heat exchange enters the multiple first runners 121 through the multiple first immersion holes 122.

In S400, the coolant within all the first runners 121 is first collected into the corresponding first collection sub-channels 123, and then the coolant within all the first collection sub-channels 123 is collected into the first general collection channel 124 and discharged to the outside of the battery box 100 through the liquid outlet 15.

In addition, after being discharged to the outside of the battery box 100, the coolant may also be cooled by using an external refrigeration device. The cooled coolant is recirculated to the liquid inlet 14 to enter the battery box 100 to cool the battery module 200 again.

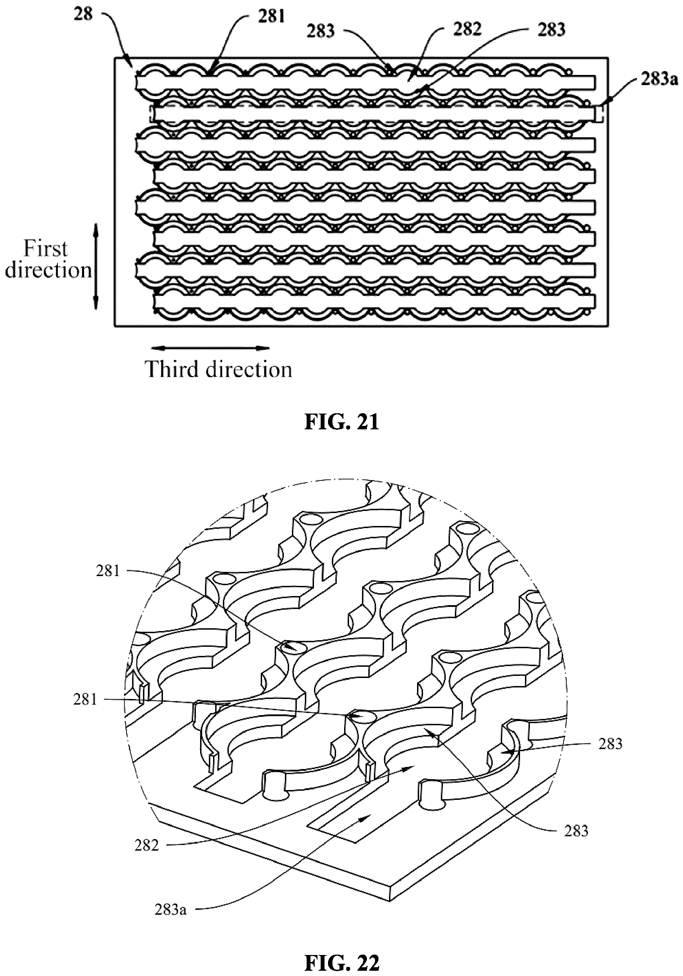

As shown in FIGS. 16 to 22, an embodiment of the present application further provides a battery pack. The battery pack includes a battery box 300 and a battery module 400 disposed within the battery box 300. In this embodiment, the first direction is the vertical direction, the second direction is the width direction of the battery box 300, and the third direction is the length direction of the battery box 300. The main differences between the battery box 300 and the battery box 100 are as follows: 1) a support member 28 for supporting the battery module 400 and a limit member 29 are added; 2) the arrangement positions of a liquid inlet 24 and a liquid outlet 25 are adjusted; 3) the arrangement and communication manners of multiple first runners 221 of a first liquid-cooling plate 22 are adjusted; 4) the arrangement and communication manners of multiple second runners 231 of a second liquid-cooling plate 23 are adjusted.

Due to limited space, the similarities between the battery box 300 and the battery box 100 and the similarities between the battery module 400 and the battery module 200 are not repeated. The differences of the battery box 300 in this embodiment are mainly introduced below.

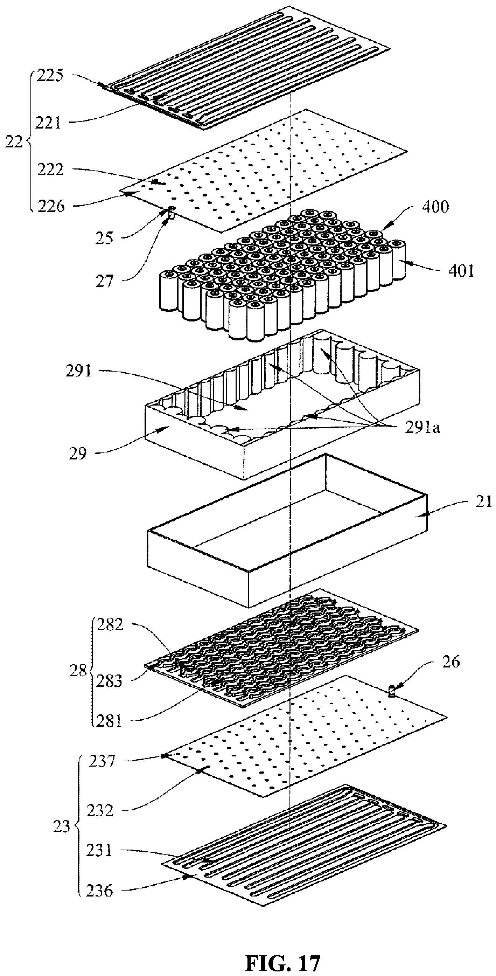

Referring to FIGS. 16 and 17, the battery box 300 includes a box body 21, the first liquid-cooling plate 22, and the second liquid-cooling plate 23. An accommodation cavity 211 for accommodating the battery module 200 is disposed within the box body 21. The first liquid-cooling plate 22 and the second liquid-cooling plate 23 are located on two sides of the accommodation cavity 211 in the first direction respectively. Multiple first runners 221 are distributed within the first liquid-cooling plate 22 in the second direction, and the length of each first runner 221 extends in the third direction. One side surface of the first liquid-cooling plate 22 facing the accommodation cavity 211 is provided with multiple first immersion holes 222. All the first immersion holes 222 communicate with the multiple first runners 221 and the accommodation cavity 211. All first immersion holes 222 communicating with the same first runner 221 are spaced apart in the third direction. Multiple second runners 231 are distributed within the second liquid-cooling plate 23 in the second direction, and the length of each second runner 231 extends in the third direction. One side surface of the second liquid-cooling plate 23 facing the accommodation cavity 211 is provided with multiple second immersion holes 232. All the second immersion holes 232 communicate with the multiple second runners 231 and the accommodation cavity 211. All second immersion holes 232 communicating with the same second runner 231 are spaced apart in the third direction.

In this embodiment, the second liquid-cooling plate 23 is located below the box body 21, and the first liquid-cooling plate 22 is located above the box body 21. The second liquid-cooling plate 23 is also provided with the liquid inlet 24. The liquid inlet 24 communicates with the multiple second runners 231 and is connected to a liquid inlet joint 26. The first liquid-cooling plate 22 is also provided with the liquid outlet 25. The liquid outlet 25 communicates with the multiple first runners 221 and is connected to a liquid outlet joint 27. Injected from the liquid inlet joint 26, a coolant enters the multiple second runners 231 through the liquid inlet 24, flows into the accommodation cavity 211 through the multiple second immersion holes 232 to immerse the battery module 400, then flows into the multiple first runners 221 from the multiple first immersion holes 222, and flows out from the liquid outlet 25 through the liquid outlet joint 27. The second liquid-cooling plate 23 and the first liquid-cooling plate 22 are disposed below the battery module 400 and above the battery module 400 respectively so that the heat dissipation stroke can be shortened, the heat exchange effect between the coolant and the battery module 400 can be improved, the temperature difference at different positions of the battery module 400 can be reduced, and the service life of the battery module 400 can be prolonged.

In an embodiment, the liquid inlet joint 26 and the liquid outlet joint 27 are connected to a refrigeration device, and the refrigeration device is used for implementing the cooling and recycling of the coolant. Refrigeration devices in the related art may be used in the present application, and details are not repeated herein.

In this embodiment, the liquid inlet 24 and the liquid outlet 25 are located at two ends of the box body 21 in the third direction respectively to ensure that the battery module 400 can be fully immersed in the coolant before the coolant can flow out from the liquid outlet 25, thereby shortening the flow stroke of the coolant and improving the heat dissipation effect. The liquid inlet 24 is located on one side of the second liquid-cooling plate 23 facing the box body 21, and the liquid outlet 25 is located on one side of the first liquid-cooling plate 22 facing the box body 21, which can reduce the overall height of the battery box 300 in the first direction and reduce the volume of the battery box 300.

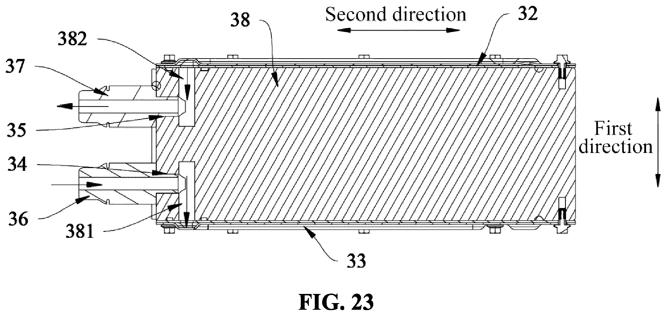

In some other embodiments, as shown in FIG. 23, a liquid inlet 34 and a liquid outlet 35 may also be located on the same side of the battery box in the third direction; the liquid inlet 34 communicates with a second liquid-cooling plate 33 through a liquid inlet channel 381, and the liquid outlet 35 communicates with a first liquid-cooling plate 32 through a liquid outlet channel 382. The liquid inlet 34 is provided with a liquid inlet joint 36, and the liquid outlet 35 is provided with a liquid outlet joint 37. The liquid inlet joint 36 and the liquid outlet joint 37 are connected to a refrigeration device, and the refrigeration device is used for implementing the cooling and recycling of a coolant. A liquid inlet member 38 is disposed within the accommodation cavity and connected to the first liquid-cooling plate 32 and the second liquid-cooling plate 33 separately. The liquid inlet channel 381 and the liquid outlet channel 382 are disposed within the liquid inlet member 38.

Referring to FIGS. 17 to 19, the battery box 300 further includes the limit member 29 placed within the accommodation cavity 211 of the box body 21. The limit member 29 includes an accommodation space 291 passing through the thickness direction of the limit member 29, and the battery module 400 is accommodated within the accommodation space 291. The arrangement of the limit member 29 can limit the battery module 400 to the accommodation space 291 of the limit member 29, which can implement the limited installation of the battery module 400. Moreover, the coolant only needs to fill the accommodation space 291 to make the battery module 400 immersed in the coolant, without filling the accommodation cavity 211 of the entire box body 21, so as to reduce the amount of the coolant used, reduce the cost, reduce the overall weight of the battery pack, improve the circulation efficiency of the coolant, and ensure the heat dissipation effect of the coolant.

The battery module 400 includes multiple rows of cell groups 400a arranged in the second direction, and each row of the cell groups 400a includes multiple cells 401 arranged in the third direction; flow-guiding gaps 402 are formed between adjacent cells 401 and between the multiple cells 401 and the inner wall of the accommodation space 291 for the flow of the coolant.

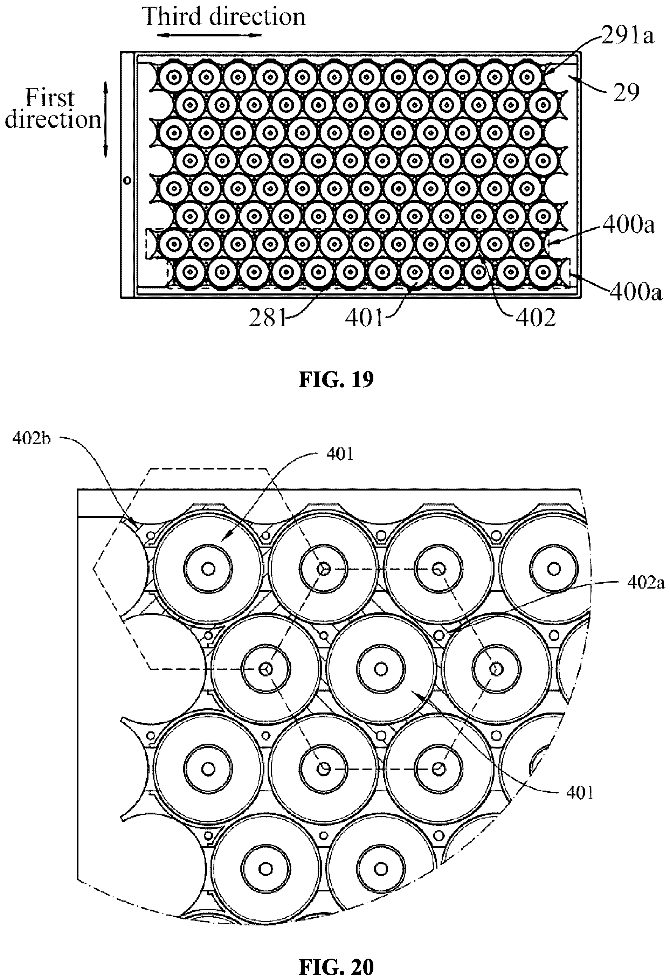

Referring to FIG. 20, the inner wall of the accommodation space 291 includes multiple cell profiling surfaces 291a arranged sequentially; a first flow-guiding gap 402a is formed between each of cells 401 located at the middle position of the battery module 400 and cells 401 on the peripheral side of each of the cells 401 located at the middle position; a second flow-guiding gap 402b is formed between each of cells 401 located at the outermost edge of the battery module 400, cells 401 adjacent to each of the cells 401 located at the outermost edge and the multiple cell profiling surfaces 291a; the cross-sectional shape of the second flow-guiding gap 402b is substantially the same as the cross-sectional shape of the first flow-guiding gap 402a. The inner wall of the accommodation space 291 is provided with the multiple cell profiling surfaces 291a to imitate the arrangement manner of the multiple cells 401 within the battery module 400 so that the flow amount of the coolant flowing on the peripheral side of each of the cells 401 located at the outermost edge can be equivalent to the flow amount of the coolant flowing on the peripheral side of each of the cells 401 located at the middle position, thereby ensuring the equivalent heat dissipation efficiency of the multiple cells 401 at different positions and the equivalent temperature of the multiple cells 401 at the different positions and improving the consistency of the overall temperature of the battery module 400.

The battery box 300 further includes the support member 28 located above the second liquid-cooling plate 23 and arranged to support the battery module 400. The support member 28 includes multiple through holes 281 communicating with the flow-guiding gaps 402 and the multiple second immersion holes 232. The flow-guiding gaps 402 are arranged for the flow of the coolant so that the multiple cells 401 can be immersed in the coolant, and so that the coolant can flow from the multiple first immersion holes 222 into the multiple first runners 221.

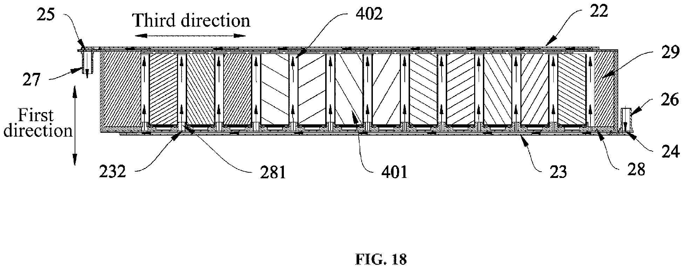

In actual application, the coolant flows from the liquid inlet joint 26 through the liquid inlet 24 into the multiple second runners 231 and then flows into the flow-guiding gaps 402 through the multiple second immersion holes 232 and the multiple through holes 281. The coolant gradually flows from the bottom of the battery module 400 to the top of the battery module 400, flows into the multiple first runners 221 through the multiple first immersion holes 222, and then flows out through the liquid outlet 25 from the liquid outlet joint 27. During the whole process, the battery module 400 is immersed in the coolant, and the immersion thermal management of the battery module 400 is implemented. With continued reference to FIGS. 17 and 18, the multiple through holes 281 are arranged in one-to-one correspondence with the multiple second immersion holes 232, thereby ensuring that the coolant flowing out of each second immersion hole 232 can directly flow into a respective flow-guiding gap 402 through a respective through hole 281. In this manner, the flow rate of the coolant can be improved, thereby improving the heat dissipation efficiency of the coolant.

Diameters of multiple through holes 281 respectively corresponding to one row of the cell groups 400a gradually decrease from the position of the liquid inlet 24 to the direction facing away from the liquid inlet 24 (from right to left in the third direction in FIG. 18). That is, the diameter of a through hole 281 facing the liquid inlet 24 is smaller than the diameter of a through hole 281 facing away from the liquid inlet 24. After entering the multiple second runners 231 from the liquid inlet 24, the coolant flows through each second immersion hole 232 sequentially in the third direction and flows into the respective flow-guiding gap 402 from each second immersion hole 232. In this process, since the coolant first flows through cells 401 facing the liquid inlet 24 and then flows through cells 401 facing away from the liquid inlet 24, based on this, the diameters of the multiple through holes 281 are arranged to gradually decrease from the position of the liquid inlet 24 to the direction facing away from the liquid inlet 24, which can ensure that the flow rate and flow amount of the coolant flowing on the peripheral side of each of cells 401 at different positions in the battery module 400 can be equivalent, reducing the temperature difference of each of the cells 401 at the different positions and thereby ensuring the consistency of the overall temperature of the battery module 400.

Referring to FIGS. 17, 21 and 22, the support member 28 includes multiple positioning grooves 282, and the multiple positioning grooves 282 are arranged in one-to-one correspondence with the multiple cells 401. The bottoms of the multiple cells 401 are accommodated within the multiple positioning grooves 282 respectively, which can limit the multiple cells 401 and facilitate the positioning and assembly of the multiple cells 401. Multiple positioning grooves 282 corresponding to one row of the cell groups 400a communicate with each other to facilitate the flow of the coolant between the one row of the cell groups 400a and the heat transfer of the coolant at different positions.

Each positioning groove 282 includes two support blocks 283 spaced apart. The two support blocks 283 are arranged to support a respective cell 401 so that the bottom of the respective cell 401 can be spaced apart from the groove bottom surface of each positioning groove 282 to ensure that the coolant can flow at the bottom of the respective cell 401 to cool and dissipate heat at the bottom of the respective cell 401.

In this embodiment, the interval between the two support blocks 283 within the same positioning groove 282 forms a flow-guiding space, and flow-guiding spaces corresponding to one row of the cell groups 400a communicate with each other to form a flow-guiding runner 283a, so as to facilitate the flow of the coolant between the one row of the cell groups 400a and the heat transfer of the coolant at different positions.

In addition, a flow-guiding runner 283a is formed below each row of the cell groups 400a of the battery module 400 by using the support member 28, which can not only dissipate heat of the bottoms of the multiple cells 401 at different positions to achieve the effect of immersion cooling of the multiple cells 401 in all directions, but also open a valve at the bottom to quickly cool the multiple cells 401 in the event of thermal runaway of the multiple cells 401. In this manner, the heat can be quickly brought out of the battery box 300, thereby suppressing the spread of the thermal runaway and improving the safety of the battery pack.

A method for cooling the battery pack includes the steps below.

In S101, the coolant is provided so that the coolant can flow into the multiple second runners 231 from the liquid inlet 14; the coolant within the multiple second runners 231 enters the accommodation space 291 of the limit member 29 through the multiple second immersion holes 232 and enters each flow-guiding gap 402 of the battery module 400 to perform immersion heat dissipation on the multiple cells 401 one by one.

In S201, the coolant that has finished heat exchange enters the multiple first runners 221 through the multiple first immersion holes 222 and is discharged to the outside of the battery box 300 through the liquid outlet 15.

In S301, after being discharged to the outside of the battery box 300, the coolant may also be cooled by using an external refrigeration device; the cooled coolant is recirculated to the liquid inlet 14 to enter the battery box 300 to cool the battery module 400 again.

Provided are a battery box and a battery pack containing the battery box. The battery box (100) includes a box body (11), a first liquid-cooling plate (12), a second liquid-cooling plate (13), a liquid inlet (14), and a liquid outlet (15). Accommodation cavity (111) for accommodating battery module (200) is disposed within the box body (11). The first liquid-cooling plate (12) and the second liquid-cooling plate (13) are located on two sides of the accommodation cavity (111) in the first direction respectively. First runners (121) are distributed within the first liquid-cooling plate (12). Length of each first runner (121) extends in the third direction. The first liquid-cooling plate (12) is provided with first immersion holes (122) communicating with the first runners (121) and the accommodation cavity (111). Second runners (131) are distributed within the second liquid-cooling plate (13). Length of each second runner (131) extends in the third direction. The second liquid-cooling plate (13) is provided with second immersion holes (132) communicating with the second runners (131) and the accommodation cavity (111). The liquid inlet (14) and the liquid outlet (15) communicate with the first runners (121) and the second runners (131) respectively. The battery box in the present application can increase the probability of each cell contacting a coolant, improve the heat exchange uniformity and effects of all the cells, and prolong the service life of all the cells.

## Claims

1. A battery box, comprising:
a box body, a first liquid-cooling plate, a second liquid-cooling plate, a liquid inlet, and a liquid outlet,
wherein an accommodation cavity for accommodating a battery module is disposed within the box body, and the first liquid-cooling plate and the second liquid-cooling plate are located on two sides of the accommodation cavity in a first direction respectively;
wherein a plurality of first runners are distributed within the first liquid-cooling plate in a second direction, a length of each of the plurality of first runners extends in a third direction, one side surface of the first liquid-cooling plate facing the accommodation cavity is provided with a plurality of first immersion holes communicating with the plurality of first runners and the accommodation cavity, and among the plurality of first immersion holes, first immersion holes communicating with a same first runner of the plurality of first runners are spaced apart in the third direction;
wherein a plurality of second runners are distributed within the second liquid-cooling plate in the second direction, a length of each of the plurality of second runners extends in the third direction, one side surface of the second liquid-cooling plate facing the accommodation cavity is provided with a plurality of second immersion holes communicating with the plurality of second runners and the accommodation cavity, and among the plurality of second immersion holes, second immersion holes communicating with a same second runner of the plurality of second runners are spaced apart in the third direction;
wherein the first direction, the second direction and the third direction are disposed at an included angle to each other; and
wherein the liquid outlet communicates with the plurality of first runners, and the liquid inlet communicates with the plurality of second runners.

2. The battery box of claim 1, wherein the battery module comprises a plurality of rows of cell groups arranged in the second direction, each row of the cell groups comprises a plurality of cells arranged in the third direction, and flow-guiding gaps are formed between at least two adjacent rows of the cell groups; and
each of the flow-guiding gaps is correspondingly provided with a respective one of the plurality of first runners and a respective one of the plurality of second runners;
wherein a flow-guiding gap is further formed between each of two sides of the battery module in the second direction and the box body; and
wherein the plurality of first immersion holes are provided in one-to-one correspondence with the plurality of second immersion holes.

3. The battery box of claim 1 or 2, wherein the first liquid-cooling plate and the second liquid-cooling plate are arranged in the first direction; and
the first liquid-cooling plate is located above the second liquid-cooling plate; or the second liquid-cooling plate is located above the first liquid-cooling plate.

4. The battery box of claim 1 or 2, wherein the liquid inlet and the liquid outlet are located on a same side of the battery box in the first direction, the liquid inlet communicates with the second liquid-cooling plate through a liquid inlet channel, and the liquid outlet is disposed on the first liquid-cooling plate;
wherein a liquid inlet member is disposed within the accommodation cavity and connected to the first liquid-cooling plate and the second liquid-cooling plate separately, the liquid inlet channel is disposed within the liquid inlet member, the liquid inlet is arranged to pass through the first liquid-cooling plate and communicate with the liquid inlet channel and is spaced apart from the plurality of first runners, and the liquid inlet channel communicates with the plurality of second runners; and
wherein the liquid inlet member is securely connected to the second liquid-cooling plate.

5. The battery box of claim 1 or 2, wherein the first liquid-cooling plate and the second liquid-cooling plate are arranged in one of the following manners:
a plurality of first collection sub-channels and a first general collection channel are disposed within the first liquid-cooling plate, the plurality of first collection sub-channels are distributed in the second direction, each of the plurality of first collection sub-channels communicates with at least two of the plurality of first runners, the plurality of first collection sub-channels communicate with the first general collection channel, and the first general collection channel communicates with the liquid outlet; or
a plurality of second collection sub-channels and a second general collection channel are disposed within the second liquid-cooling plate, the plurality of second collection sub-channels are distributed in the second direction, each of the plurality of second collection sub-channels communicates with at least two of the plurality of second runners, the plurality of second collection sub-channels communicate with the second general collection channel, and the second general collection channel communicates with the liquid inlet.

6. The battery box of claim 5, wherein the first liquid-cooling plate is located above the second liquid-cooling plate; and
the second general collection channel comprises a liquid inlet region facing the liquid inlet, and
a diverter is disposed within the liquid inlet region; an outer sidewall of the diverter is at least partially an arc surface, and a cross-sectional area of one end of the diverter facing the liquid inlet is smaller than a cross-sectional area of an other end of the diverter facing away from the liquid inlet; and
wherein the diverter comprises a diversion outer peripheral surface, a diversion bottom surface, and a diversion top surface, the diversion top surface and the diversion bottom surface are spaced apart in the first direction, the diversion outer peripheral surface is connected to the diversion top surface and the diversion bottom surface, the diversion bottom surface is connected to a bottom surface of the second general collection channel, a dimension of the diversion top surface is less than a dimension of the diversion bottom surface, and the diversion outer peripheral surface comprises a connection surface and a diversion guide surface that are interconnected in a peripheral portion of the diverter, wherein the connection surface is connected to an inner side surface of the second general collection channel, and the diversion guide surface is a conical surface and faces the plurality of second collection sub-channels.

7. The battery box of claim 1 or 2, wherein the first liquid-cooling plate and the second liquid-cooling plate are arranged in one of the following manners:
the first liquid-cooling plate comprises a first substrate and a first sealing plate, wherein one side surface of the first substrate is concavely formed with a first groove, the side surface of the first substrate provided with the first groove is connected to the first sealing plate, the first sealing plate is arranged to seal a notch of the first groove to form the plurality of first runners, and the plurality of first immersion holes are disposed on the first substrate or the first sealing plate; or
the second liquid-cooling plate comprises a second substrate and a second sealing plate, wherein one side surface of the second substrate is concavely formed with a second groove, the side surface of the second substrate provided with the second groove is connected to the second sealing plate, the second sealing plate is arranged to seal a notch of the second groove to form the plurality of second runners, and the plurality of second immersion holes are disposed on the second substrate or the second sealing plate.

8. The battery box of claim 1 or 2, wherein two sides of the box body in the first direction are provided with a first opening and a second opening respectively, the first liquid-cooling plate is connected to the box body and arranged to seal the first opening, and the second liquid-cooling plate is connected to the box body and arranged to seal the second opening.

9. The battery box of claim 1 or 2, wherein a sum of areas of the plurality of first immersion holes is S1, a sum of cross-sectional areas of the plurality of first runners in the second direction is S2, and a ratio of S1 to S2 satisfies that 3:50 or 1:10;
a sum of areas of the plurality of second immersion holes is S3, a sum of cross-sectional areas of the plurality of second runners in the second direction is S4, and a ratio of S3 to S4 satisfies that 3:50 or 1:10;
an area of the battery module is S6; and
a ratio of S1, S2, S3, S4, and S6 satisfies at least one of the following conditions:
a ratio of S1to S2 and to S6 satisfies that 13:120:45500 or 13:130:45500; or
a ratio of S3 to S4 and to S6 satisfies that 13:120:45500 or 13:130:45500.

10. The battery box of claim 1, further comprising a limit member disposed within the accommodation cavity, wherein the limit member comprises an accommodation space passing through the first direction, and the battery module is accommodated within the accommodation space; and
wherein the battery module comprises a plurality of rows of cell groups arranged in the second direction, each row of the cell groups comprises a plurality of cells arranged in the third direction, and flow-guiding gaps are formed between adjacent ones of the plurality of cells and between the plurality of cells and an inner wall of the accommodation space.

11. The battery box of claim 10, wherein the inner wall of the accommodation space comprises a plurality of cell profiling surfaces arranged sequentially; among the plurality of cells, a first flow-guiding gap is formed between each of cells located at a middle position of the battery module and cells on a peripheral side of each of the cells located at the middle position, and a second flow-guiding gap is formed between each of cells located at an outermost edge of the battery module, cells adjacent to each of the cells located at the outermost edge and the plurality of cell profiling surfaces, wherein a cross-sectional shape of the second flow-guiding gap is same as a cross-sectional shape of the first flow-guiding gap.

12. The battery box of claim 10, further comprising a support member arranged to support the battery module, wherein the support member comprises a plurality of through holes communicating with the flow-guiding gaps and the plurality of second runners;
wherein the plurality of through holes are arranged in one-to-one correspondence with the plurality of second immersion holes;
wherein among the plurality of through holes, diameters of a plurality of through holes respectively corresponding to one row of the cell groups gradually decrease from a position of the liquid inlet to a direction facing away from the liquid inlet;
wherein the support member comprises a plurality of positioning grooves, and the plurality of positioning grooves are arranged in one-to-one correspondence with the plurality of cells, and among the plurality of positioning grooves, more than one positioning groove corresponding to one row of the cell groups communicate with each other;
wherein each of the plurality of positioning grooves comprises two support blocks spaced apart, and the two support blocks are arranged to support a respective cell of the plurality of cells, to enable a bottom surface of the respective cell to be spaced apart from a groove bottom surface of each of the plurality of positioning grooves; and
wherein among the plurality of positioning grooves, an interval between the two support blocks in a same positioning groove forms a flow-guiding space, and flow-guiding spaces corresponding to one row of the cell groups communicate with each other to form a flow-guiding runner.

13. The battery box of any one of claims 10 to 12, wherein the liquid inlet is disposed on the second liquid-cooling plate; and the liquid outlet is disposed on the first liquid-cooling plate;
wherein the liquid inlet is located on one side of the second liquid-cooling plate facing the battery box; and the liquid outlet is located on one side of the first liquid-cooling plate facing the battery box; and
wherein the liquid inlet and the liquid outlet are located at two ends of the battery box in the third direction respectively; or the liquid inlet and the liquid outlet are located on a same side of the battery box in the third direction separately.

14. The battery box of any one of claims 10 to 12, wherein the liquid inlet communicates with the second liquid-cooling plate through a liquid inlet channel, and the liquid outlet communicates with the first liquid-cooling plate through a liquid outlet channel;
wherein a liquid inlet member is disposed within the accommodation cavity, the liquid inlet channel and the liquid outlet channel are disposed within the liquid inlet member, and the liquid inlet member is connected to the first liquid-cooling plate and the second liquid-cooling plate separately; and
wherein the liquid inlet and the liquid outlet are located at two ends of the battery box in the third direction respectively; or the liquid inlet and the liquid outlet are located on a same side of the battery box in the third direction separately.

15. A battery pack, comprising a battery module and the battery box of any one of claims 1 to 14, wherein the battery module is sealed and installed within the battery box.
